# EUROPÄISCHE PATENTSCHRIFT

(11) **EP 0 676 323 B1**
(45) Veröffentlichungstag und Bekanntmachung des Hinweises auf die Patenterteilung: **06.12.1995**
(21) Anmeldenummer: 94107414.8
(22) Anmeldetag: 13.05.1994
(51) Int. Cl.: B62B 3/10

(54) **Stapelbarer Einkaufswagen**
Nestable shopping trolley
Chariot d'achat du type emboîtable

(30) Priorität: 28.04.1994 DE 9407072 U; 05.05.1994 DE 9407471 U
(43) Veröffentlichungstag der Anmeldung: 11.10.1995
(73) Patentinhaber: WANZL METALLWARENFABRIK GMBH, D-89336 Leipheim (DE)
(72) Erfinder: Eberlein, Herbert, D-89347 Bubesheim (DE)

(56) Entgegenhaltungen:
- EP-A- 0 340 386
- DE-U- 8 500 639

## Beschreibung

Die Erfindung betrifft einen stapelbaren Einkaufswagen, mit einem Fahrgestell, mit einer Warentrageinrichtung, die an ihrem hinteren Ende von einer verschwenkbaren Rückwand begrenzt ist, mit einer Schiebeeinrichtung und mit einer im hinteren Bereich des Einkaufswagens vorgesehenen Ablage, die zur Aufnahme größerer Gegenstände geeignet ist und die eine nach rückwärts über den Boden der Warentrageinrichtung hinausragende Abstellfläche und einen von der Abstellfläche getrennt angeordneten, um eine horizontale Achse nach hinten ausschwenkbaren bügelförmigen Anschlag aufweist.

Das deutsche Gebrauchsmuster G 85 00 639.4 beschreibt im Ausführungsbeispiel Fig. 5 einen derartigen Einkaufswagen. Dessen Ablage ist zum Transport einer Getränkekiste bestimmt Zu diesem Zweck ist eine Abstellfläche vorgesehen, die nach rückwärts über den Boden der Warentrageinrichtung hinausragt. Die Abstellfläche bildet eine erste Auflagestelle für die Getränkekiste. Eine zweite Auflagestelle wird durch einen bügelförmigen Anschlag gebildet, der an der Schiebeeinrichtung um eine horizontale Achse schwenkbar gelagert ist. An der so gebildeten zweiten Auflagestelle sind ferner Anschläge vorgesehen, welche die Getränkekiste nach rückwärts begrenzen.

Es gibt Märkte, die ihre Getränke nicht in Getränkekisten, sondern schrumpfverpackt als Flaschenpackungen anbieten. Mit dem eingangs genannten, zum nächstliegenden Stand der Technik zählenden Einkaufswagen ist es nicht möglich, solche Flaschenpackungen oder auch andere größere Verkaufsgegenstände wie Waschmittelschachteln, Waschmittelflaschen, verpacktes WC-Papier oder Küchentücherpackungen, kurz alle größeren Verkaufsgegenstände, die nicht als Kiste ausgebildet sind, zu transportieren, ohne riskieren zu müssen, daß diese Gegenstände nach kurzer Fahrt von der Ablage herabfallen. Dazu sind beim eingangs genannten Einkaufswagen die Auflagestellen viel zu klein. Auch die Tatsache, daß der bügelförmige Anschlag unter einem auf der Ablage befindlichen Gegenstand leicht wegziehbar ist, läßt eine derartige Ablage als ungeeignet für den Transport der eben genannten Artikel erscheinen.

Ausgehend von diesem Stand der Technik besteht die Aufgabe der Erfindung darin, einen gattungsgemäßen Einkaufswagen so weiterzuentwickeln, daß mit dessen Ablage schrumpfverpackte Flaschen, Schachteln, größere Verpackungen und dergleichen sicher transportiert werden können.

Die Lösung der Aufgabe besteht darin, daß die horizontale Achse des Anschlages höher als die Abstellfläche und tiefer als die Schiebeeinrichtung angeordnet ist und daß sich die horizontale Achse näher am vorderen Ende des Einkaufswagens befindet als die hintere Begrenzung der Abstellfläche.

Durch die vorgeschlagene Lösung ist es möglich, "größere" Gegenstände, die kleiner oder schmäler sind als die üblichen Getränkekisten, sicher auf der Ablage zu transportieren. Ein oder mehrere auf der Abstellfläche abgestellte Gegenstände werden von drei Seiten vom Anschlag umfaßt. Die vierte Seite bildet die Rückwand. Somit können die Gegenstände nicht von der Ablage herabfallen.
Um einen größeren Gegenstand, beispielsweise eine Flaschenpackung auf der Ablage zu transportieren, braucht der in Nichtgebrauchslage gewöhnlich nach unten gerichtete Anschlag nur so weit nach oben geschwenkt zu werden, bis die Flaschenpackung zwischen der Rückwand und dem Anschlag eingefügt und auf der Abstellfläche abgestellt werden kann. Die Lage der horizontalen Achse des Anschlage sowie dessen Schwenkradius ist in Bezug zur Abstellfläche so gewählt, daß der Anschlag bei unterschiedlich breiten oder dicken Gegenständen von selbst eine unterschiedlich hohe oder unterschiedlich weit ausgeschwenkte Lage einnimmt, jedoch immer so, daß die Anschlagfunktion des Anschlages erhalten bleibt und der oder die Gegenstände nicht von der Ablage herabfallen können.

Es ist von besonderem Vorteil, wenn die Abstellfläche nach rückwärts, also entgegengesetzt zur Schieberichtung des Einkaufswagens nach hinten abfällt. Dadurch werden auf der Ablage befindliche Gegenstände gegen die Querverbindung des Anschlages gedrückt, so daß die Anschlags- und Haltefunktion des Anschlages erhöht und ein Transport der besagten Gegenstände noch sicherer wird.

Nun ist wohl durch die DE 40 23 078 A1 ein Transportwagen bekannt, dessen Warentrageinrichtung durch eine Ladefläche oder Ladeplattform und dessen Rückwand durch eine schwenkbare Anlagefläche gebildet ist, wobei entweder innerhalb der Anlagefläche und/oder über der Anlagefläche je ein schwenkbarer Anschlag zum Halten von stabförmigen Gegenständen vorgesehen ist. In Gebrauchslage befinden sich diese Anschläge über der Warentrageinrichtung. Abgesehen davon, daß man mit diesen Anschlägen keine größeren Gegenstände in der bevorzugten Form von Flaschenpackungen usw. halten kann, ist der bekannte Transportwagen deswegen als gattungsfremd einzustufen, da er keine rückwärtige Ablage aufweist, deshalb auch keine nach rückwärts über den Boden der Warentrageinrichtung hinausragende Abstellfläche besitzt und somit nicht mit einem nach hinten ausschwenkbaren Anschlag ausgestattet ist. Vielmehr ist die Anlagefläche dazu bestimmt, auf der Warentrageinrichtung befindliches Gut von dem Herabfallen nach hinten zu schützen. Beim genannten Transportwagen bedarf es deshalb keiner Anschläge, um beispielsweise Flaschenpackungen vor dem Herabfallen zu bewahren. Diese Forderung erfüllt die Anlagefläche vollauf. Selbst wenn in der genannten Patentschrift darauf verwiesen wird, daß die vorgeschlagenen Vorrichtungen zum Abstellen von stabförmigen Gegenständen auch bei Transportwagen möglich sein soll, die zusätzlich noch mit einer weiteren Warentrageinrichtung in Form eines Korbes ausgestattet sind, vermittelt dieser Hinweis keine Lösungsansätze, die zur vorliegenden Erfindung führen könnten.

Die Erfindung wird anhand einiger Ausführungsbeispiele näher erläutert. Es zeigt
- Fig. 1: einen Einkaufswagen mit einer auf der Ablage befindlichen Flaschenpackung;
- Fig. 2: eine Einzelheit der Lagerung eines Anschlages;
- Fig. 3: den in Fig. 1 dargestellten Einkaufswagen in Seitenansicht;
- Fig. 4: einen weiteren Einkaufswagen, der eine Flaschenpackung trägt;
- Fig. 5: einen Einkaufswagen, bei dem der Anschlag an der Rückwand vorgesehen ist;
- Fig. 6: im Detail die Anordnung des Anschlages an einer Rückwand;
- Fig. 7: einen Einkaufswagen in Schieberichtung betrachtet;
- Fig. 8: einen weiteren Einkaufswagen in Seitenansicht;
- Fig. 9: einen Einkaufswagen mit verschiebbarer Abstellfläche sowie
- Fig. 10: einen als Plattformwagen gestalteten Einkaufswagen.

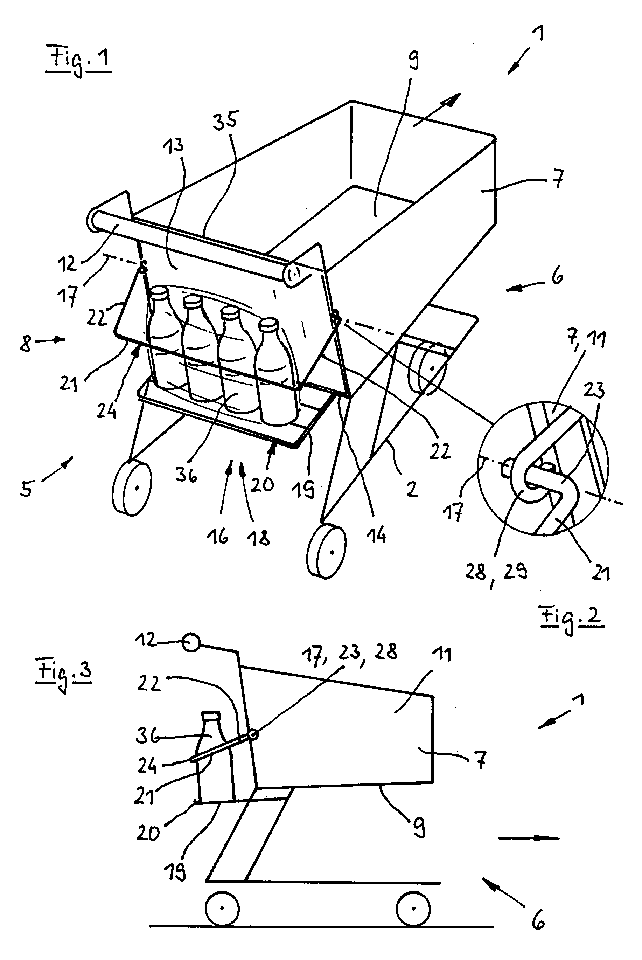

Der in Fig. 1 dargestellte Einkaufswagen 1 ist nur einer von vielen gängigen Einkaufswagen 1, bei denen die Erfindung anwendbar ist. Alle diese Einkaufswagen 1 weisen ein Fahrgestell 2 auf, das eine Warentrageinrichtung 7 in der bevorzugten Form eines Korbes oder allgemein eines Behältnisses trägt. Am hinteren Ende 5 des Einkaufswagens 1 ist eine Schiebeeinrichtung 12 vorgesehen, die entweder am Fahrgestell 2, oder wie üblich an der Warentrageinrichtung 7 angeordnet ist. Eine aus Drahtgitter und/oder aus Kunststoff bestehende Rückwand 13, die das hintere Ende 8 der Warentrageinrichtung 7 begrenzt, ist in bekannter Weise um eine oben liegende horizontale Achse 35 verschwenkbar gelagert, damit in ebenfalls bekannter Weise gleiche Einkaufswagen 1 platzsparend ineinandergeschoben werden können. Sowohl die Warentrageinrichtung 7, als auch das Fahrgestell 2 sind deshalb entsprechend konisch, gewöhnlich in Schieberichtung sich verjüngend gestaltet. Im hinteren Bereich 16 des Einkaufswagens 1 ist eine Ablage 18 vorgesehen, die zur Aufnahme größerer Gegenstände 36, wie Flaschenpackungen, Schachteln, Gebinde oder sonstiger Verpackungen geeignet ist. Die Ablage 18 weist eine gewöhnlich tiefer als die Warentrageinrichtung 7 gelegene ortsfeste Abstellfläche 19 und einen um eine horizontale Achse 17 nach hinten ausschwenkbaren bügelförmigen Anschlag 21 auf, wobei die Abstellfläche 19 auch dadurch gebildet sein kann, daß der Boden 9 der Warentrageinrichtung 7 nach hinten über die untere Begrenzung 14 der Rückwand 13 hinausragt. Der Boden 9 der Warentrageinrichtung 7 und die sich anschließende, durch die Rückwand 13 getrennte Abstellfläche 19 liegen dann auf einer gemeinsamen Ebene. Gewöhnlich wird jedoch die Abstellfläche 19 ein eigenständiges Teil sein, das nach hinten über den Boden 9 der Warentrageinrichtung 7 hinausragt. Die horizontale Achse 17, oder auch Schwenkachse des Anschlages 21 erstreckt sich, wie bei allen nachfolgenden Ausführungsbeispielen ebenfalls, quer zur Schieberichtung (Pfeil) des Einkaufswagens 1. Auf der Ablage 18 ist im Beispiel als Gegenstand 36 eine schrumpfverpackte, vier Wasserflaschen beinhaltende Flaschenpackung abgestellt. Die Flaschenpackung ruht auf der Abstellfläche 19 und wird durch den Anschlag 21, gegen dessen Querverbindung 24 die Flaschenpackung angelehnt ist, so umfaßt, daß diese nicht von der Ablage 18 herabstürzen kann.

Fig. 2 zeigt im Detail eines der beiden Lager 28 für den Anschlag 21. Die Warentrageinrichtung 7 ist im Beispiel in bekannter Weise als Drahtgitterkorb gestaltet. Es empfiehlt sich deshalb, als Lager 28 eine ebenfalls aus Draht gefertigte Schlaufe 29 vorzusehen und diese an einer Seitenwand 11 der Warentrageinrichtung 7 bevorzugt anzuschweißen. Es befindet sich an jeder Seitenwand 11 ein Lager 28. Beide Lager 28 liegen auf der horizontalen Achse 17. In den Lagern 28 ist je ein horizontal angeordneter Abschnitt 23 des Anschlages 21 drehbeweglich geführt, so daß sich der Anschlag 21 auf- und abschwenken läßt. Anstelle von Schlaufen 29 können auch kleine, mit einer Bohrung ausgestattete Laschen vorgesehen sein, die zur Aufnahme der Abschnitte 23 des Anschlages 21 vorgesehen sind.

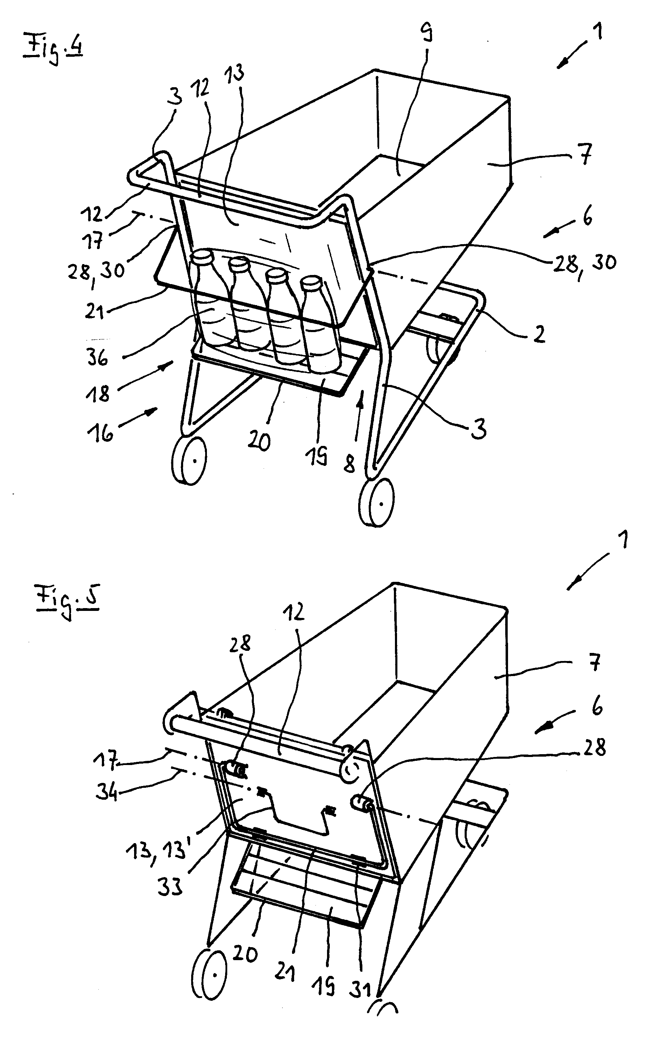

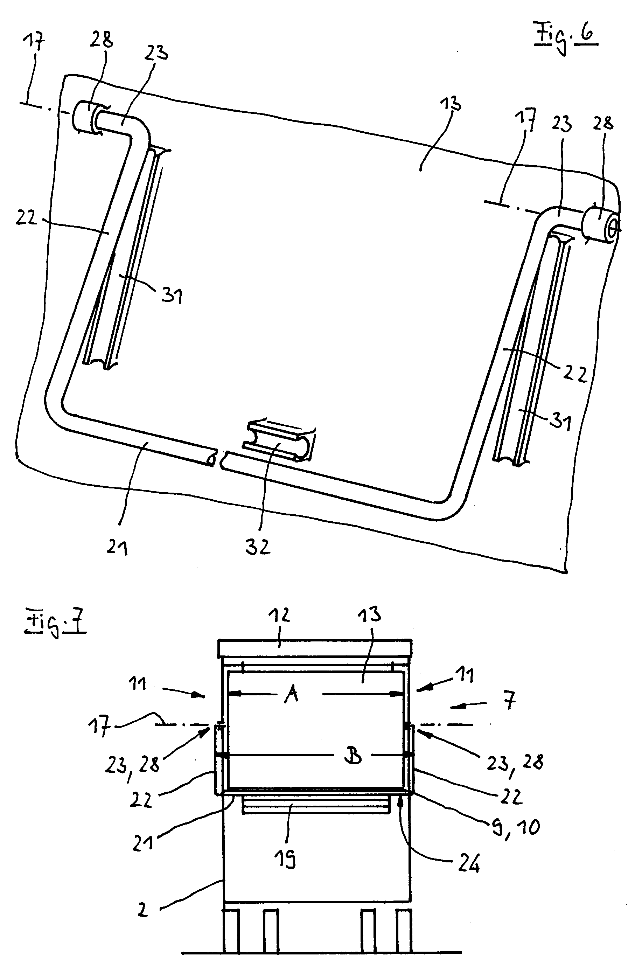

Fig. 3 zeigt den in Fig. 1 beschriebenen Einkaufswagen 1 in Seitenansicht. Die bevorzugt aus Längs- und Querdrähten gebildete Abstellfläche 19 ist im Beispiel tiefer gelegen, als der Boden 9 der Warentrageinrichtung 7. Die Abstellfläche 19 kann aber auch, wie bereits erwähnt, durch eine nach hinten sich erstreckende Verlängerung des Bodens 9 der Warentrageinrichtung 7 gebildet sein. Auf der ortsfest angeordneten, bevorzugt entgegen der Schieberichtung (Pfeil) des Einkaufswagens 1 nach hinten abfallenden oder geneigten Abstellfläche 19 befindet sich ein größerer Gegenstand 36. Oberhalb der Abstellfläche 19 ist der bügelförmige Anschlag 21 angeordnet. Er ist in Gebrauchslage dargestellt und umfaßt den Gegenstand 36, wobei wie bei den nachfolgend beschriebenen Ausführungsbeispielen ebenfalls, die beiden in Längsrichtung des Einkaufswagens 1 sich erstreckenden Schenkel 22 des Anschlages 21 je eine seitliche Begrenzung und die Querverbindung 24, welche die Schenkel 22 verbindet, eine rückwärtige Begrenzung für den Gegenstand 36 bilden, vgl. auch Fig. 1. An den Schenkeln 22 befinden sich die horizontalen Abschnitte 23, die in den an den Seitenwänden 11 befindlichen, auf der horizontalen Achse 17 gelegenen Lagern 28 schwenkbar gelagert sind. Die horizontale Achse 17 ist höher als die Abstellfläche 19 und tiefer als die Schiebeeinrichtung 12 angeordnet. Sie befindet sich ferner näher am vorderen Ende 6 des Einkaufswagens 1 als die hintere Begrenzung 20 der Abstellfläche 19.

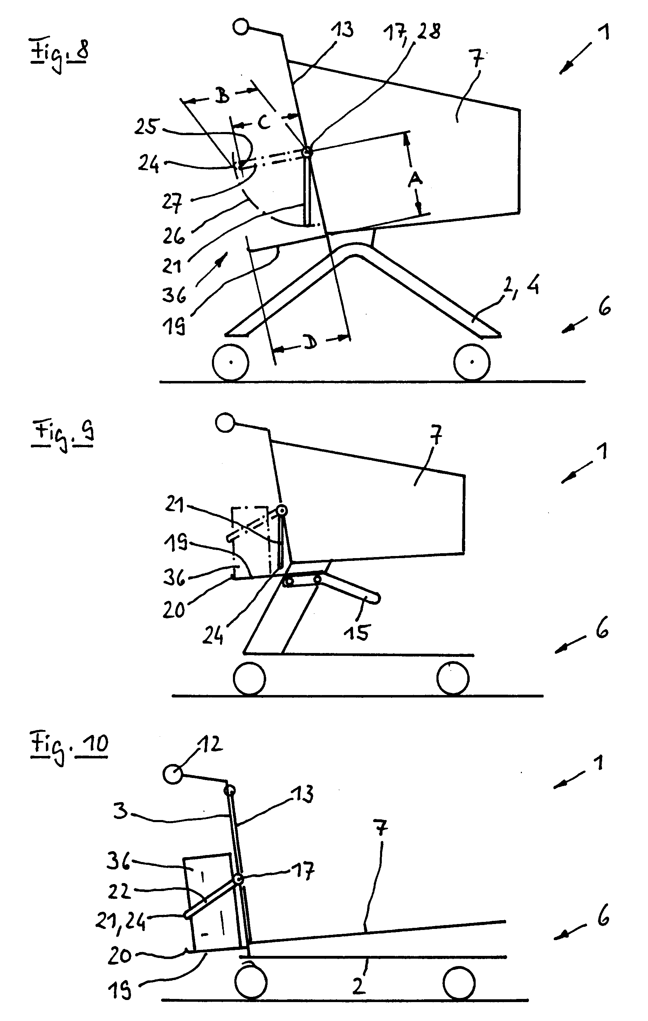

Bei dem in Fig. 4 dargestellten Einkaufswagen 1 ist die Warentrageinrichtung 7 an Tragelementen 3 befestigt, die ausgehend vom Fahrgestell 2 nach oben führen und in die Schiebeeinrichtung 12 münden. Bei dieser Bauweise ist es zweckmäßig, die Lager 28 und damit die horizontale Achse 17 an den Tragelementen 3 vorzusehen. Dabei genügen als Lager 28 je eine horizontal sich erstreckende Bohrung 30 in den aus Rohren gebildeten Tragelementen 3. Natürlich können die Lager 28 auch aus bekannten Laschen bestehen, die an den Tragelementen 3 angeschweißt sind. Man erkennt in der Zeichnung die horizontale Achse 17, die höher als die Abstellfläche 19, tiefer als die Schiebeeinrichtung 12 und näher am vorderen Ende 6 des Einkaufswagens 1 angeordnet ist, als die hintere Begrenzung 20 der Abstellfläche 19.

Bei dem in Fig. 5 gezeigten Einkaufswagen 1 ist die Rückwand 13 der behälterförmigen Warentrageinrichung 7 aus Kunststoff gestaltet. Diese Art der Gestaltung besitzt den Vorteil, daß die auf der horizontalen Achse 17 befindlichen, für den Anschlag 21 bestimmten Lager 28 an der Rückseite 13' der Rückwand 13 angeformt sind, vgl. auch Fig. 6. Auch bei diesem Ausführungsbeispiel ist die horizontale Achse 17 höher als die Abstellfläche 19 und tiefer als die Schiebeeinrichtung 12 angeordnet. Auch befindet sich die horizontale Achse 17 näher am vorderen Ende 6 des Einkaufswagens 1 als die hintere Begrenzung 20 der Abstellfläche 19. In der Zeichnung ist der Anschlag 21 in Nichtgebrauchslage dargestellt. Er ist entweder nach unten gerichtet oder in an der Rückwand 13 befindlichen Vertiefungen 31 eingerastet. Insbesondere bei einer aus Kunststoff bestehenden Rückwand 13 ist es möglich, einen weiteren, jedoch kleineren Anschlag 33 in geeigneter Weise vorzusehen, der ebenfalls auf einer horizontalen Achse 34 verschwenkbar gelagert ist. Die horizontale Achse 34 kann identisch sein mit der horizontalen Achse 17. Sie kann aber auch in einem Abstand zu dieser angeordnet sein. Die Achse 34 befindet sich ebenfalls über der Abstellfläche 19 und unterhalb der Schiebeeinrichtung 12. Sie ist näher am vorderen Ende 6 des Einkaufswagens 1 angeordnet als die hintere Begrenzung 20 der Abstellfläche 19. Es soll an dieser Stelle nicht unerwähnt bleiben, daß es natürlich möglich ist, den Anschlag 21 oder die Anschläge 21 und 33 an einer bekannten, aus Draht gefertigten Rückwand 13 der Warentrageinrichtung 7 anzuordnen, sofern die Einzelabstände von in einer Reihe gestapelter Einkaufswagen 1 nicht zu knapp sind. In diesen Fällen ist die horizontale Achse 17, oder sind beide horizontale Achsen 17 und 34, bevorzugt durch wenigstens einen Querstab gebildet, der Bestandteil der Rückwand 13 ist und an dem der bügelförmige Anschlag 21, wahlweise auch der Anschlag 33 durch Bildung von an den Schenkeln 22 des Anschlages 21, 33 befindlichen Schlaufen 29 schwenkbar gelagert ist.

Fig. 6 zeigt einen Teil der Rückwand 13, wie sie in Fig. 5 beschrieben wurde. Die horizontalen Abschnitte 23 der Schenkel 22 des Anschlages 21 sind in zwei Lagern 28 verschwenkbar gelagert, die sich auf der horizontalen Achse 17 befinden und die an der Rückwand 13 angeformt sind. In zweckmäßiger Weise sind Vertiefungen 31 und wenigstens ein Rastelement 32 vorgesehen, die dann zur Aufnahme des Anschlages 21 bestimmt sind, wenn dieser sich in Nichtgebrauchslage befindet. Die Vertiefungen 31 und das wenigstens eine Rastelement 32 sind den Umrissen des Anschlages 21 nachempfunden. Der Anschlag 21 ist leicht ausgeschwenkt dargestellt.

In einer Ansicht in Schieberichtung des Einkaufswagens 1 betrachtet zeigt Fig. 7 die zweckmäßige Anordnung des Anschlages 21 entweder an den Seitenwänden 11 der Warentrageinrichtung 7 oder an den Tragelementen 3. Man erkennt die Lager 28, in welchen sich die Abschnitte 23 des Anschlages 21 befinden. Die Lager 28 und demnach die Abschnitte 23 befinden sich auf der horizontalen Achse 17. Die lichte Weite B der Schenkel 22 des Anschlages 21 ist annähernd gleich, bevorzugt jedoch geringfügig größer als die größte entsprechend gemessene lichte Weite oder Abstand der Seitenwände 11 der als Behältnis gestalteten Warentrageinrichtung 7. Die lichte Weite B ist jedoch auf jeden Fall größer als die Breite A der Rückwand 13. Die Querverbindung 24 des Anschlages 21 befindet sich in Nichtgebrauchslage des Anschlages 21 entweder höchstens auf gleicher Höhe wie die hintere Begrenzung 10 des an der Rückwand 13 endenden Bodens 9 der Warentrageinrichtung 7 oder geringfügig tiefer. Auch ist es sinnvoll, die Schenkel 22 außerhalb der Seitenwände 11 oder der Tragelemente 3, also rechts und links von diesen anzuordnen. Bei Einhaltung der genannten maßlichen Vorgaben befindet sich der Anschlag 21 in Nichtgebrauchslage außerhalb jenes Raumes, den die Warentrageinrichung 7 eines rückwärtigen Einkaufswagens 1 dann beansprucht, wenn der rückwärtige Einkaufswagen 1 in bekannter Weise in einen vorausbefindlichen Einkaufswagen 1 eingeschoben wird.

Fig. 8 zeigt einen Einkaufswagen 1 in Seitenansicht, dessen Fahrgestell 2 im Gegensatz zu den bisher beschriebenen Einkaufswagen 1 durch nach oben gekrümmte Träger 4 gebildet ist. Auf den Trägern 4 befindet sich die Warentrageinrichtung 7. Der Anschlag 21 ist in Nichtgebrauchslage dargestellt. Er ist, wie dargestellt, nach unten gerichtet oder an der Rückwand 13 lösbar eingerastet. In der Zeichnung sind strichpunktiert der Schwenkradius 27 sowie die kreisbogenförmige Bahn 26 der Querverbindung 24 des Anschlages 21 eingezeichnet. Der Abstand A der Lager 28 und damit der Abstand A der horizontalen Achse 17 zur Abstellfläche 19 ist bevorzugt größer als der äußerste Schwenkradius B der Querverbindung 24. Die lichte Weite C, gemessen von der Rückwand 13 bis zur Innenkante 25 der Querverbindung 24 der Anschlages 21 ist mindestens gleich oder unwesentlich größer als die nutzbare Tiefe D der Abstellfläche 19. Damit ist sichergestellt, daß die Tiefe D der Abstellfläche 19 voll nutzbar ist und der Anschlag 21 höchstens parallel zur Abstellfläche 19 ausgeschwenkt ist und damit einen Gegenstand sicher hält. Je nach Dicke oder Tiefe des abzustellenden Gegenstandes 36 ist der Anschlag 21 mehr oder weniger weit ausgeschwenkt. Er paßt sich in seiner Gebrauchslage immer dem jeweiligen Gegenstand 36 an. Es ist zweckmäßig, die kreisbogenförmige Bahn 26 der Querverbindung 24 oberhalb der Abstellfläche 19 verlaufen zu lassen.

Bei dem in Fig. 9 dargestellten Einkaufswagen 1 ist die Abstellfläche 19, im Gegensatz zu den bisher beschriebenen Ausführungsbeispielen, als Schublade gestaltet, die, beispielsweise in geeigneten Führungen 15 gelagert, in Längsrichtung des Einkaufswagens 1 aus einer Nichtgebrauchslage, in der sie sich bevorzugt unterhalb der Warentrageinrichtung 7 befindet, in eine Gebrauchslage (wie gezeichnet) und umgekehrt bewegen läßt. In Gebrauchslage ist die Abstellfläche 19 ebenfalls nach hinten schräg abfallend angeordnet, um einen auf der Abstellfläche 19 befindlichen Gegenstand 36 gegen die Querverbindung 24 des Anschlages 21 rutschen zu lassen. Der Anschlag 21 ist in Nichtgebrauchslage nach unten gerichtet.

Um zu zeigen, wie vielfältig die Einkaufswagen im Sinne der Erfindung gestaltet sein können, zeigt Fig. 10 einen Einkaufswagen 1, dessen von einer nach oben verschwenkbaren Rückwand 13 begrenzte Warentrageinrichtung 7 als Ladeplattform gestaltet ist. Die am Fahrgestell 2 befestigte Warentrageinrichtung 7 muß also nicht unbedingt als Behältnis oder Korb ausgebildet sind. Nach rückwärts ragt, wie bereits beschrieben, eine nach hinten abfallende Abstellfläche 19 hinaus, auf der ein größerer Gegenstand 36 abgestellt ist. Der Anschlag 21 ist verschwenkbar an den Tragelementen 3 befestigt, die zu der Schiebeeinrichtung 12 führen. Der Anschlag 21 umfaßt wieder mit seinen beiden Schenkeln 22 und mit seiner Querverbindung 24 einen auf der Abstellfläche 19 abgestellten Gegenstand 36. Der Gegenstand 36 ist aufgrund der geneigt angeordneten Abstellfläche 19 an die Querverbindung 24 angelehnt. Auch bei diesem Ausführungsbeispiel, wie auch bei jenem nach Fig. 9, befindet sich die horizontale Achse 17 über der Abstellfläche 19 und unterhalb der Schiebeeinrichtung 12. Auch ist die horizontale Achse 17 näher am vorderen Ende 6 des Einkaufswagens 1 angeordnet als die hintere Begrenzung 20 der Abstellfläche 19. Letzteres trifft beim Ausführungsbeispiel gemäß Fig. 9 zumindest dann zu, wenn sich dessen verschiebbare Abstellfläche 19 in Gebrauchslage befindet.

Im Rahmen einer Ausgestaltung der Erfindung ist es möglich, die Lager 28 und die Abschnitte 23 der Schenkel 22 so auszustatten, daß eine Arretiereinrichtung geschaffen ist, die es erlaubt, den Anschlag 21 bis zu einer vorbestimmten Höhe oder Lage anzuheben, in welcher dieser von selbst arretiert bleibt. Eine derartige Anordnung erleichtert das Beladen der Ablage 18, da man beide Hände für das Heben und Manövrieren eines größeren Gegenstandes 36 frei hat. Anschließend kann dann der Anschlag 21 so weit nach unten verschwenkt werden, daß ein sicheres Abstellen des Gegenstandes 36 garantiert ist. Die Arretierung des Anschlages 21 in der vorbestimmten Lage muß jedoch sehr leicht aufhebbar sein. Außerdem sollte diese Lage so gewählt sein, daß die Schenkel 22 des Anschlages 21 keine horizontale Lage, sondern eine schräg nach unten oder schräg nach oben gerichtete Position einnehmen. Läßt man nämlich den Anschlag 21 in der ausgeschwenkten und arretierten Lage und versucht jemand, einen Einkaufswagen 1 in den eben beschriebenen Einkaufswagen 1 einzuschieben, dann muß irgend ein Teil des einzuschiebenden Einkaufswagens 1, bevorzugt die Warentrageinrichtung 7 selbst in der Lage sein, den Anschlag 21 entweder nach unten oder nach oben in die Nichtgebrauchslage zu drücken, damit sich der Anschlag 21 außerhalb jenes Raumes befindet, den die Warentrageinrichtung 7 des rückwärtigen Einkaufswagens 1 beim Einschiebevorgang benötigt. An den Seitenwänden 11 oder an den Trägern 3 oder überhaupt am Fahrgestell 2 kann wenigstens ein Rastelement 32 vorgesehen sein, das den Anschlag 21 in Nichtgebrauchslage lösbar arretiert.
Die Erfindung ist bevorzugt anhand von Ausführungsbeispielen beschrieben worden, bei denen sich der Anschlag 21 aus einer nach unten gerichteten Nichtgebrauchslage nach oben in eine Gebrauchslage verschwenken läßt. Es ist natürlich auch möglich, als Nichtgebrauchslage des Anschlages 21 jene Lage vorzusehen, in der dieser nach oben gerichtet ist, um nach unten in die Gebrauchslage geschwenkt zu werden, sofern die vorab beschriebenen maßlichen Vorgaben eingehalten worden sind. Es ist jedoch empfehlenswert, sich an den bevorzugt und ausführlich beschriebenen Lösungen zu orientieren, da ein in Nichtgebrauchslage nach oben gerichteter Anschlag 21 beim Herabschwenken dann zum Hindernis werden kann, wenn in bekannter Weise ein Kind in einem Kindersitz mitgeführt wird, der gewöhnlich an der Rückwand 13 angeordnet ist.

## Patentansprüche

1. Stapelbarer Einkaufswagen (1), mit einem Fahrgestell (2), mit einer Warentrageinrichtung (7), die an ihrem hinteren Ende (8) von einer verschwenkbaren Rückwand (13) begrenzt ist, mit einer Schiebeeinrichtung (12) und mit einer im hinteren Bereich (16) des Einkaufswagens (1) vorgesehenen Ablage (18), die zur Aufnahme größerer Gegenstände (36) geeignet ist und die eine nach rückwärts über den Boden (9) der Warentrageinrichtung (7) hinausragende Abstellfläche (19) und einen von der Abstellfläche (19) getrennt angeordneten, um eine horizontale Achse (17) nach hinten ausschwenkbaren bügelförmigen Anschlag (21) aufweist, dadurch **gekennzeichnet**, daß die horizontale Achse (17) des Anschlages (21) höher als die Abstellfläche (19) und tiefer als die Schiebeeinrichtung (12) angeordnet ist und daß sich die horizontale Achse (17) näher am vorderen Ende (6) des Einkaufswagens (1) befindet als die hintere Begrenzung (20) der Abstellfläche (19).

2. Stapelbarer Einkaufswagen nach Anspruch 1, dadurch **gekennzeichnet**, daß die Abstellfläche (19) entgegen der Schieberichtung des Einkaufswagens (1) nach hinten abfallend angeordnet ist.

3. Stapelbarer Einkaufswagen nach Anspruch 1 oder 2, dadurch **gekennzeichnet**, daß die zum Verschwenken des Anschlages (21) erforderlichen, auf der horizontalen Achse (17) gelegenen Lager (28) entweder an den Seitenwänden (11) der Warentrageinrichtung (7), oder an der Rückseite (13') der Rückwand (13) oder an Tragelementen (3) vorgesehen sind, welche die Warentrageinrichtung (7) tragen.

4. Stapelbarer Einkaufswagen nach einem der Ansprüche 1 bis 3, dadurch **gekennzeichnet**, daß die lichte Weite B der beiden Schenkel (22) des Anschlages (21) gleich oder größer ist als die lichte Weite der Seitenwände (11) der Warentrageinrichtung (7) und größer ist als die Breite A der Rückwand (13).

5. Stapelbarer Einkaufswagen nach einem der Ansprüche 1 bis 4, dadurch **gekennzeichnet**, daß in Nichtgebrauchslage des Anschlages (21) dessen die Schenkel (22) verbindende Querverbindung (24) entweder auf gleicher Höhe oder tiefer als die hintere Begrenzung (10) des Bodens (9) der Warentrageinrichtung (7) angeordnet ist.

6. Stapelbarer Einkaufswagen nach einem der Ansprüche 1 bis 5, dadurch **gekennzeichnet**, daß sich der Anschlag (21) in Nichtgebrauchslage außerhalb jenes Raumes befindet, den die Warentrageinrichtung (7) eines rückwärtigen Einkaufswagens (1) dann beansprucht, wenn der rückwärtige Einkaufswagen (1) in einen vorausbefindlichen Einkaufswagen (1) eingeschoben wird.

7. Stapelbarer Einkaufswagen nach einem der Ansprüche 1 bis 6, dadurch **gekennzeichnet**, daß die beim Verschwenken des Anschlages (21) durch dessen Querverbindung (24) entstehende kreisbogenförmige Bahn (26) oberhalb der Abstellfläche (19) verläuft.

8. Stapelbarer Einkaufswagen nach einem der Ansprüche 1 bis 7, dadurch **gekennzeichnet**, daß die lichte Weite C, gemessen von der Rückwand (13) zur Innenkante (25) der Querverbindung (24), gleich oder größer ist als die nutzbare Tiefe D der Abstellfläche (19).

9. Stapelbarer Einkaufswagen nach einem der Ansprüche 1 bis 8, dadurch **gekennzeichnet**, daß der Anschlag (21) in Nichtgebrauchslage nach unten oder nach oben gerichtet ist.

10. Stapelbarer Einkaufswagen nach einem der Ansprüche 1 bis 9, dadurch **gekennzeichnet**, daß die Schenkel (22) des Anschlages (21) außerhalb der Seitenwände (11) der Warentrageinrichtung (7) angeordnet sind.

11. Stapelbarer Einkaufswagen nach einem der Ansprüche 1 bis 10, dadurch **gekennzeichnet**, daß wenigstens ein Rastelement (32) vorgesehen ist, das den Anschlag (21) in Nichtgebrauchslage lösbar arretiert hält.

12. Stapelbarer Einkaufswagen nach einem der Ansprüche 1 bis 11, dadurch **gekennzeichnet**, daß eine Rasteinrichtung vorgesehen ist, durch welche der Anschlag (21) in einer vorbestimmten ausgeschwenkten Lage lösbar arretiert ist.

13. Stapelbarer Einkaufswagen nach einem der Ansprüche 1 bis 12, dadurch **gekennzeichnet**, daß die Abstellfläche (19) durch eine nach hinten gerichtete Verlängerung des Bodens (9) der Warentrageinrichtung (7) gebildet ist.

14. Stapelbarer Einkaufswagen nach einem der Ansprüche 1 bis 13, dadurch **gekennzeichnet**, daß die Abstellfläche (19) in Längsrichtung des Einkaufswagens (1) bewegbar angeordnet ist.

15. Stapelbarer Einkaufswagen nach einem der Ansprüche 1 bis 14, dadurch **gekennzeichnet**, daß die Abstellfläche (19) tiefer angeordnet ist, als der Boden (9) der Warentrageinrichtung (7).

16. Stapelbarer Einkaufswagen nach einem der Ansprüche 1 bis 15, dadurch **gekennzeichnet**, daß an der Rückwand (13) ein weiterer Anschlag (33) vorgesehen ist, dessen horizontale Achse (34) entweder identisch ist mit der horizontalen Achse (17) oder in einem Abstand zu dieser angeordnet ist.

17. Stapelbarer Einkaufswagen nach einem der Ansprüche 1 bis 16, dadurch **gekennzeichnet**, daß die Schenkel (22) des Anschlages (21) seitliche Begrenzungen und die Querverbindung (24) eine rückwärtige Begrenzung für einen auf der Ablage abgestellten Gegenstand (36) bilden.

## Claims

1. A stackable shopping trolley (1) comprising a wheel frame (2), a goods-carrying arrangement (7) limited at its rear end (8) by a tiltable rear wall (13), a pushing arrangement (12) and a shelf (18) provided in the rear region (16) of the shopping trolley (1) and suitable for holding relatively large objects (36), the said shelf (18) having a deposit surface (19) projecting backwards beyond the base (9) of the goods-carrying arrangement (7) and a handle-shaped stop (21) arranged separately from the deposit surface (19) and pivotable rearwards about a horizontal axis (17), characterised in that the horizontal axis (17) of the stop (21) is arranged higher than the deposit surface (19) and lower than the pushing arrangement (12) and in that the horizontal axis (17) is closer to the front end (6) of the shopping trolley (1) than the rear limit (20) of the deposit surface (19).

2. A stackable shopping trolley according to claim 1, characterised in that the deposit surface (19) is arranged so as to incline downwards towards the rear contrary to the pushing direction of the shopping trolley (1).

3. A stackable shopping trolley according to claim 1 or 2, characterised in that the mountings (28), necessary for the pivoting of the stop (21) and located on the horizontal axis (17), are provided either on the side walls (11) of the goods-carrying arrangement (7) or on the rear surface (13') of the rear wall (13) or on supporting members (3) supporting the goods-carrying arrangement (7).

4. A stackable shopping trolley according to any one of claims 1 to 3, characterised in that the inner width B between the two arms (22) of the stop (21) is equal to or greater than the inner width between the side walls (11) of the goods-carrying arrangement (7) and greater than the width A of the rear wall (13).

5. A stackable shopping trolley according to any one of claims 1 to 4, characterised in that, in the position of non-use of the stop (21), the transverse connecting member (24) thereof connecting the arms (22) is arranged either at the same height as or lower than the rear limit (10) of the base (9) of the goods-carrying arrangement (7).

6. A stackable shopping trolley according to any one of claims 1 to 5, characterised in that, in the position of non-use, the stop (21) is located outside the space taken up by the goods-carrying arrangement (7) of a rear shopping trolley (1) when the rear shopping trolley (1) is pushed into a preceding shopping trolley (1).

7. A stackable shopping trolley according to any one of claims 1 to 6, characterised in that the arc-shaped path (26) described by the transverse connecting member (24) of the stop (21) during the pivoting thereof extends above the deposit surface (19).

8. A stackable shopping trolley according to any one of claims 1 to 7, characterised in that the clearance C, measured from the rear wall (13) to the inner edge (25) of the transverse connecting member (24), is equal to or greater than the useable depth D of the deposit surface (19).

9. A stackable shopping trolley according to any one of claims 1 to 8, characterised in that the stop (21) is directed upwards or downwards in the position of non-use.

10. A stackable shopping trolley according to any one of claims 1 to 9, characterised in that the arms (22) of the stop (21) are arranged outside the side walls (11) of the goods-carrying arrangement (7).

11. A stackable shopping trolley according to any one of claims 1 to 10, characterised in that at least one detent member (32) is provided which releasably holds the stop (21) in the position of non-use.

12. A stackable shopping trolley according to any one of claims 1 to 11, characterised in that a detent arrangement is provided, by means of which the stop (21) is releasably held in a predetermined pivoted-out position.

13. A stackable shopping trolley according to any one of claims 1 to 12, characterised in that the deposit surface (19) is formed by a rearward extension of the base (9) of the goods-carrying arrangement (7).

14. A stackable shopping trolley according to any one of claims 1 to 13, characterised in that the deposit surface (9) is movably arranged in the longitudinal direction of the shopping trolley (1).

15. A stackable shopping trolley according to any one of claims 1 to 14, characterised in that the deposit surface (19) is arranged lower than the base (9) of the goods-carrying arrangement (7).

16. A stackable shopping trolley according to any one of claims 1 to 15, characterised in that a further stop (33) is provided on the rear wall (13), the horizontal axis (34) of the said stop (33) either being identical to the horizontal axis (17) or being arranged at a distance therefrom.

17. A stackable shopping trolley according to any one of claims 1 to 16, characterised in that the arms (22) of the stop (21) form lateral limits and the transverse connecting member (24) forms a rear limit for an object (36) deposited on the shelf.

## Revendications

1. Chariot à provisions emboîtable (1), comprenant un châssis (2), comprenant un dispositif porteur (7) destiné aux marchandises qui est délimité à son extrémité arrière (8) par une paroi arrière pivotante (13), comprenant un dispositif (12) qui permet de pousser le chariot, et comprenant un support (18) qui est prévu dans la région arrière (16) du chariot à provisions (1), qui est susceptible de recevoir des objets volumineux (36) et qui comporte une surface d'appui (19) faisant saillie vers l'arrière au-delà du fond (9) du dispositif porteur (7) destiné aux marchandises, ainsi qu'un organe de retenue en forme d'étrier (21), celui-ci étant disposé en étant séparé de la surface d'appui (19) et en pouvant pivoter vers l'arrière autour d'un axe horizontal (17), caractérise par le fait que l'axe horizontal (17) de l'organe de retenue (21) est disposé à un niveau qui est supérieur à celui de la surface d'appui (19) et qui est inférieur à celui du dispositif (12) permettant de pousser le chariot, et par le fait que l'axe horizontal (17) est plus proche de l'extrémité avant (6) du chariot à provisions (1) que la délimitation arrière (20) de la surface d'appui (19).

2. Chariot à provisions emboîtable selon la revendication 1, caractérisé par le fait que la surface d'appui (19) est disposée en étant inclinée vers l'arrière à l'opposé de la direction ou l'on pousse le chariot à provisions (1).

3. Chariot à provisions emboîtable selon la revendication 1 ou 2, caractérisé par le fait que les paliers (28) qui sont nécessaires pour le pivotement de l'organe de retenue (21) et qui sont situés sur l'axe horizontal (17) sont prévus, soit sur les parois latérales (11) du dispositif porteur (7) destiné aux marchandises, soit sur le côté arrière (13') de la paroi arrière (13), soit sur des éléments porteurs (3) qui portent le dispositif porteur (7) destiné aux marchandises.

4. Chariot à provisions emboîtable selon l'une des revendications 1 à 3, caractérisé par le fait que l'écartement (B) des deux ailes (22) de l'organe de retenue (21) est égal ou supérieur à l'écartement des parois latérales (11) du dispositif porteur (7) destiné aux marchandises, et qu'il est supérieur à la largeur (A) de la paroi arrière (13).

5. Chariot à provisions emboîtable selon l'une des revendications 1 à 4, caractérisé par le fait que, dans la position de non-utilisation de l'organe de retenue (21), la liaison transversale (24) de celui-ci qui relie les ailes (22) est disposée à un niveau égal ou inférieur à celui de la délimitation arrière (10) du fond (9) du dispositif porteur (7) destiné aux marchandises.

6. Chariot à provisions emboîtable selon l'une des revendications 1 à 5, caractérisé par le fait que, dans la position de non-utilisation, l'organe de retenue (21) se trouve à l'extérieur de l'espace que le dispositif porteur (7) destiné aux marchandises d'un chariot à provisions qui est situé à l'arrière (1) occupe lorsque ce chariot à provisions qui est situé à l'arrière est enfoncé dans un chariot à provisions (1) qui se trouve devant lui.

7. Chariot à provisions emboîtable selon l'une des revendications 1 à 6, caractérisé par le fait que le trajet en forme d'arc de cercle (26) qui est parcouru par la liaison transversale (24) de l'organe de retenue (21) lors du pivotement de celui-ci s'étend au-dessus de la surface d'appui (19).

8. Chariot à provisions emboîtable selon l'une des revendications 1 à 7, caractérisé par le fait que l'écartement (C) mesuré depuis la paroi arrière (13) jusqu'au bord intérieur (25) de la liaison transversale (24) est égal ou supérieur à la profondeur utile (D) de la surface d'appui (19).

9. Chariot à provisions emboîtable selon l'une des revendications 1 à 8, caractérisé par le fait que l'organe de retenue (21) est dirigé vers le bas ou vers le haut dans la position de non-utilisation.

10. Chariot à provisions emboîtable selon l'une des revendications 1 à 9, caractérisé par le fait que les ailes (22) de l'organe de retenue (21) sont disposées à l'extérieur des parois latérales (11) du dispositif porteur (7) destiné aux marchandises.

11. Chariot à provisions emboîtable selon l'une des revendications 1 à 10, caractérisé par le fait qu'il est prévu au moins un élément d'encliquetage (32) qui bloque l'organe de retenue (21) d'une manière amovible dans la position de non-utilisation.

12. Chariot à provisions emboîtable selon l'une des revendications 1 à 11, caractérisé par le fait qu'il est prévu un élément d'encliquetage au moyen duquel l'organe de retenue (21) peut être bloqué d'une manière amovible dans une position en pivotement prédéterminée.

13. Chariot à provisions emboîtable selon l'une des revendications 1 à 12, caractérisé par le fait que la surface d'appui (19) est constituée par un prolongement dirigé vers l'arrière du fond (9) du dispositif porteur (7) destiné aux marchandises.

14. Chariot à provisions emboîtable selon l'une des revendications 1 à 13, caractérisé par le fait que la surface d'appui (19) est montée mobile dans la direction longitudinale du chariot à provisions (1).

15. Chariot à provisions emboîtable selon l'une des revendications 1 à 14, caractérisé par le fait que la surface d'appui (19) est disposée à un niveau qui est inférieur à celui du fond (9) du dispositif porteur (7) destiné aux marchandises.

16. Chariot à provisions emboîtable selon l'une des revendications 1 à 15, caractérisé par le fait qu'il est prévu sur la paroi arrière (13) un autre organe de retenue (33) dont l'axe horizontal (34) est, soit confondu avec l'axe horizontal (17), soit disposé à une certaine distance de celui-ci.

17. Chariot à provisions emboîtable selon l'une des revendications 1 à 16, caractérisé par le fait que les ailes (22) de l'organe de retenue (21) constituent des limitations latérales pour les déplacements d'un objet (36) qui est déposé sur le support, et que sa liaison transversale (24) constitue une limitation arrière pour ces déplacements.
